# EUROPEAN PATENT SPECIFICATION

(11) **EP 2 755 502 B1**
(45) Date of publication and mention of the grant of the patent: **24.10.2018**
(21) Application number: 12769215.0
(22) Date of filing: 11.09.2012
(51) Int. Cl.: A23L 29/262

(54) **SWEETENER COMPOSITION**
SÜSSSTOFFZUSAMMENSETZUNG
COMPOSITION D'ÉDULCORANT

(30) Priority: 15.09.2011 US 201161534980 P
(43) Date of publication of application: 23.07.2014
(73) Proprietor: Dow Global Technologies LLC, Midland, MI 48674 (US)
(72) Inventor: ADDEN, Anne, 29664 Walsrode (DE)
(74) Representative: f & e patent
(86) International application number: PCT/US2012/054595
(87) International publication number: WO 2013/039874

(56) References cited:
- GB-A- 1 094 494
- US-A- 4 394 399
- US-A- 5 106 646
- US-A- 5 397 588

## Description

### FIELD

The present invention concerns sweetener compositions and a method of increasing the sweetening effect or reducing the amount of added mono- or disaccharides in food compositions.

### INTRODUCTION

Sugar is a popular sweetening additive in human food preparation. In day-to-day language the term "sugar" is typically used to mean the disaccharide sucrose but other commonly used calorie rich sweetening additives such as glucose, fructose and high fructose corn syrups are also meant by the skilled artisans. Overconsumption of sugar has become a major problem in many human societies. Among others, due to its high calorie content, high uptake of sugar is not recommended for dietary reasons. The most common adverse health effects of sugar are tooth decay, overweight and obesity. Moreover, people suffering from diabetes need to control the intake of sugar. Health studies on sugars have also shown that a high consumption of sugar can lead to high levels of blood fats, and raise the risk of heart diseases.

Much effort has been spent by the skilled artisans to find ways of reducing the amount of sugar in food while still maintaining the perceived sweetness which is very much desired by many consumers. A common way of fully or partially replacing sugar in food is the usage of a class of sugar substitutes known as high-intensity sweeteners. These are compounds with many times the sweetness of sucrose, such as stevia, aspartame, sucralose, neotame, acesulfame potassium, and saccharin. As a result, much less sweetener is required and energy contribution is often negligible.
For example US patent 5,397,588 describes a reduced calorie fruit spread comprising the gelled product of: a. water; b. fruit or fruit flavoring; c. one or more high intensity sweeteners selected from the group consisting of aspartame; saccharin; acesulfame-K; mixtures thereof; and mixtures of aspartame, saccharin, or acesulfame-K with sucralose; d. low methoxy pectin or carrageenan; e. carobxymethylcellulose; f. guar gum; and g. locust bean gum.
Moreover, US patent 4,394,399 discloses a low calorie table syrup product consisting essentially of water, sugar, cellose gum, salt, flavoring agent, anti-mycotic and sodium hexametaphosphate.

Although the use of high intensity sweeteners provides many advantages, like minimal energy contribution to food and minimal impact on the decay of teeth, their use brings its own problems. The sensation of sweetness caused by these compounds (the "sweetness profile") is sometimes notably different from sucrose, so they are often used in complex mixtures that achieve the most natural sweet sensation. Moreover, if the sucrose (or other sugar) that is replaced has contributed to the texture of the product, then replacing the sugar with a high intensity sweetener often leads to a different mouthfeel when the food is consumed. For example, often a bulking agent in addition to the high intensity sweetener is needed to completely or partially replace the sugar in a manner that is satisfactory to the consumers.

Food hydrocolloids such as guar gum, cornstarch, gum tragacanth, carboxymethylcellulose, methylcellulose, and pectin are well-known thickeners, but they are not sweet on their own. Their effect on the four primary tastes sweetness (saccharose or sodium saccharin), sourness (citric acid), saltiness (sodium chloride) or bitterness (quinine sulfate or caffeine) in plain water has been studied by several authors, but with unclear or sometimes even conflicting results.

H. Stone and S. Oliver (Effect of Viscosity on the Detection of Relative Sweetness Intensity of Sucrose Solutions, Journal of Food Science, 31, 1966, 1, p. 129 - 134) hypothesized that it should be possible to decrease the sugar level in fruit syrups while retaining the same sweetness through selection of appropriate gums. Panelists conducted sensory analysis of plain sugar solutions and sugar solutions comprising 2 % starch ("nonslimy"), 1 % gum tragacanth ("moderately slimy"), 1 % carboxymethyl cellulose (CMC) ("slimy"), and 2.6 % methylcellulose ("extremely slimy"). However, the panelists were most sensitive toward sugar in plain water and least in the presence of carboxymethyl cellulose, meaning that the presence of a hydrocolloid even decreased the perceived sweetness of sugar.

Pangborn et al. (Effect of Hydrocolloids on Oral Viscosity and Basic Taste intensities, Journal of Texture Studies 4, (1973) 224-241) studied the impact of hydroxypropyl cellulose (HPC), xanthan, sodium alginate, and medium and low viscosity CMC on the sweetness intensities of aqueous solutions of saccharose and sodium saccharin. All studied hydrocolloids were found to depress the taste intensity of sucrose. Medium and low viscosity CMC and sodium alginate were found to increase the taste intensity of sodium saccharin.

Others studied the influence of viscosities on the perceived sweetness of solutions. T. Izutsu et al. (Effect of Viscosity on Perceived Sweetness Intensity of Sweetened Sodium Carboxymethylcellulose Solutions, Journal of Texture Studies 12 (1981) 259-273)
found a sweetness decreasing effect of medium viscosity CMC in solutions containing between 4 and 16 % saccharose with increasing viscosity. They derived an equation from their observations to predict the intensity of taste decrease. According to the authors, this relationship was also valid for high and low viscosity CMC, as they found that the type of CMC had no significant effect on the sweetness intensity.

Y. Mälkki et al. (Influence on oat gum, guar gum and carboxymethyl cellulose on the perception of sweetness and flavor, Food Hydrocolloids, Vol. 6 no. 6, pages 525-532, 1993*)* added oat gum, guar gum and carboxymethyl cellulose to sweetener solutions in water (fructose, saccharose, and aspartame). The sweetener concentrations were adjusted to give equivalent sweetness in plain water of 10 % and 30 % saccharose equivalents. The concentrations of the hydrocolloids in the sweetener solution were adjusted to achieve a viscosity of 230 and 500 mPa·s, respectively. The perceived sweetness as ranked by panelists was highest in oat gum and lowest in guar, with CMC being in the middle.

In summary, the effect of food hydrocolloids on saccharose sweetness in plain water appears to remain unclear.

More recently suggestions have been made to combine high intensity sweeteners with hydrocolloids in beverages. E.g., the International Patent Application No. WO 2010/057024 relates to a method of improving the flavor of beverages wherein hydrocolloids are incorporated into the beverage. The hydrocolloids are said to perform a dual function of enhancing both the mouthfeel and flavor of the beverage by masking the bitter quality of the high intensity sweetener. However, in addition to the complexities in formulating food products caused by usage of high intensity sweeteners, such sugar substitutes have been under controversy for some time in their relationship to their allegedly carcinogenic properties and how they may cause health problems.

Accordingly, one object of the present invention is to find a new method of reducing the amount of added mono- or disaccharides in food compositions without substantially reducing the sweetness of the food compositions. A preferred object of the present invention is to find such method with does not involve the need of incorporating a sweetening amount of a sugar substitute, such as a high-intensity sweetener, in the food composition.

### SUMMARY

Surprisingly, it has been found that the sweetening effect of mono- or disaccharides in fluid food compositions having a certain minimal viscosity or in solid food compositions can be increased by incorporating a low viscosity carboxymethyl cellulose in the food composition.

Accordingly, one aspect of the present invention is a sweetener composition consisting of
a) one or more mono- or disaccharides and b) a carboxymethyl cellulose having a viscosity of up to 200 mPa·s, measured as a 2 weight percent aqueous solution at 20 °C using a Haake RS1 viscometer with a cylinder system Z34 DIN at 10.0 s⁻¹ such that the weight ratio of a) : b) is from 0.5 : 1 to 25 : 1, and
c) 0 to 40 weight percent, based on the total weight of the sweetener composition, of one or more additional ingredients.

Another aspect of the present invention is a method of increasing the sweetening effect of mono- or disaccharides in a fluid or solid food composition comprising the step of incorporating a carboxymethyl cellulose having a viscosity of up to 200 mPa·s, measured as a 2 weight percent aqueous solution at 20 °C using a Haake RS1 viscometer with a cylinder system Z34 DIN at 10.0 s⁻¹, in combination with at least one mono- or disaccharide in the fluid or solid food composition, with the proviso that the fluid food composition has a viscosity of at least 10 mPa's, when measured in the absence of the carboxymethyl cellulose at 20 °C using a Haake RS1 viscometer at 10.0 s⁻¹.

For the sake of reducing the amount of added mono- or disaccharide in a fluid or solid food composition in this method, the amount of mono- or disaccharide incorporated in the food composition can be a fraction of an amount of mono- or disaccharide that is recommended in a given recipe for the food composition resulting in a loss of sweetness, and the carboxymethyl cellulose is incorporated as the only ingredient to compensate for the lost sweetness.

Yet another aspect of the present invention is the use of a carboxymethyl cellulose having a viscosity of up to 200 mPa·s, measured as a 2 weight percent aqueous solution at 20 °C using a Haake RS1 viscometer with a cylinder system Z34 DIN at 10.0 s⁻¹ for increasing the sweetening effect of mono- or disaccharides in i) a fluid food composition having a viscosity of at least 10 mPa·s when measured in the absence of the carboxymethyl cellulose at 20 °C, or ii) in a solid food composition.

### DETAILED DESCRIPTION

The sweetener composition of the present invention consists of a) one or more mono- or disaccharides, b) carboxymethyl cellulose, and optionally c) one or more additional ingredients.

The weight ratio of the components a) : b) is at least 0.5 : 1, preferably at least 1 : 1, more preferably at least 1.5 : 1, and particularly at least 2 : 1. The weight ratio of the components a) : b) is up to 25 : 1, preferably up to 10 : 1, and more preferably up to 5 : 1. Preferably components a) and b) are blended in such a manner that the mixture consists of from 35 to 96 percent, more preferably from 50 to 90 percent, and most preferably from 60 to 85 percent of component a) and from 65 to 4 percent, more preferably from 50 to 10 percent, and most preferably from 40 to 15 percent of component b), based on the total weight of a) and b). The sweetener composition of the present invention optionally comprises c) up to 40 percent, preferably up to 20 percent, more preferably up to 10 percent and particularly up to 5 percent of one or more additional ingredients, based on the total weight of the sweetener composition. If the sweetener composition comprises one or more additional ingredients c), their total amount is typically 0.1 percent or more, alternatively 0.2 percent or more, or 0.5 percent or more, or in some aspects of the invention 1 percent or more, based on the total weight of the sweetener composition.

Useful monosaccharides are, e.g., glucose and fructose. Useful disaccharides are, e.g., lactose, maltose and sucrose. Sucrose is preferred. The sweetener composition can comprise more than one type of mono- and/or disaccharides, but their total weight should be within the ranges stated above. Preferred examples of the component a) of the sweetener composition of the present invention are listed in the Council Directive 2001/111/EC of 20 December 2001 relating to certain sugars intended for human consumption, as published in the Official Journal of the European Communities L 10/53, 12.1.2002, such as semi-white sugar, (white) sugar, dried glucose syrup, dextrose, dextrose monohydrate, anhydrous dextrose or fructose. These sugars can be in solid or liquid form. Council Directive 2001/111/EC lists sugar solution, invert sugar solution, invert sugar syrup or glucose syrup. The sugar solution, invert sugar solution and invert sugar syrup are characterized by dry matter of not less than 62% by weight. In the sweetener composition of the present invention, the water content is included in the amount of the optional additional ingredients c).

Useful types of carboxymethyl cellulose (CMC) include their salts, preferably their sodium and potassium salts. The CMC is typically used in the form of its sodium salt. The CMC has a viscosity of up to 200 mPa·s, more preferably up to 100 mPa·s, and most preferably up to 50 mPa·s, measured as a 2 weight percent aqueous solution at 20 °C using a Haake RS1 viscometer with a cylinder system Z34 DIN at 10.0 s⁻¹. The Haake RS1 viscometer is commercially available as HAAKE RheoStress® 1 from Thermo Electron (Karlsruhe) GmbH, Germany. The viscosity of the CMC is typically 5 mPa·s or more, more typically 10 mPa·s or more, and most typically 15 mPa·s or more, when measured as indicated above. Preferred types of CMC have a DS of from 0.4 to 1.4, more preferably of from 0.6 to 1.0, and most preferably of from 0.7 to 0.9. The term "DS" refers to the degree of carboxymethyl substitution per anhydroglucose unit and means the average number of OH groups substituted with carboxymethyl groups per anhydroglucose unit. The DS is measured according to ASTM D 1439-03 "Standard Test Methods for Sodium Carboxymethylcellulose; Degree of Etherification, Test Method B: Nonaqueous Titration". The CMC can be present in various forms in the sweetener composition of the present invention, such as in powder form or in the form of agglomerates when the sweetener composition is in solid form. A way of producing CMC in the form of agglomerates is described in the International Patent Publication WO 2010/117781. Alternatively, the CMC can be in the form of an aqueous solution if the mono- and/or disaccharides a) are dissolved in water to prepare sugar solutions or syrups. The sweetener composition of the present invention can comprise more than one type of CMC's, but their total weight should be within the ranges stated above.

The optional additional ingredient c) is different from mono- and disaccharides a) and different from the carboxymethyl cellulose b) having a viscosity of up to 200 mPa's, when measured as indicated above. The optional additional ingredient c) preferably is not a sweetener, particularly not a high-intensity sweetener. In one embodiment of the invention, an optional additional ingredient c) is water, which can be present in an amount of up to 40 percent, typically up to 30 percent, based on the total weight of the sweetener composition. Other optional additional ingredients are typically additives which are solid at room temperature, for example ingredients typically incorporated in gelling sugar or jam sugar, such as gelling agents like pectin, acidifying agents like citric acid or tartaric acid, or preservatives like sorbic acid or hardened vegetable fats like palm oil. The amount of optional additional ingredients, different from water, is generally up to 10 percent, typically up to 5 percent, and more typically up to 3 percent, based on the total weight of the sweetener composition. The sweetener composition of the present invention can comprise one or more types of solid and/or liquid optional additional ingredients c), but their total amount is not more than 40 percent, based on the total weight of the sweetener composition.

It has been surprisingly found that by incorporating a CMC described above in fluid food compositions having a certain minimal viscosity or in solid food compositions the sweetening effect of mono- or disaccharides is significantly increased which enables e.g. that the amount of mono- or disaccharides in these compositions can be significantly decreased while maintaining the perceived sweetness of these compositions. For example, in the case of sucrose it has been found that the amount of sucrose in these compositions can generally be decreased by at least 10 percent, typically by at least 20 percent or even by at least 25 percent while maintaining the perceived sweetness of these compositions. This finding is surprising in view of the fact that the skilled artisans have not come to a clear conclusion what is the effect of CMC on the perceived sweetness of sucrose in plain water. Reducing the amount of sucrose in food compositions without reducing their perceived sweetness is one of the most important problems to be solved by the food industry in view of the overconsumption of sucrose and the health issues created by this overconsumption.

The fluid food composition comprising one or more mono- or disaccharides can be, e.g., liquid or gel-type. It should have a viscosity of at least 10 mPa·s, preferably at least 100 mPa·s, and more preferably at least 500 mPa·s, when measured in the absence of the carboxymethyl cellulose at 20 °C using a Haake RS1 viscometer at 10.0 s⁻¹. The fluid food composition typically has a viscosity of up to 50,000 mPa·s, in particular up to 25,000 mPa·s when measured in the absence of the carboxymethyl cellulose at 20 °C using a Haake RS1 viscometer at 10 s⁻¹. When the viscosity of a fluid food composition is between 1 and 40,000 mPa·s, it is measured at 20 °C using a Haake RS1 viscometer with a cylinder system Z34 DIN at a shear rate 10.0 s⁻¹. Viscosities above 40,000 mPa·s are measured at 20 °C using a Haake RS1 viscometer with a cone and plate geometry at 10 s⁻¹. The term "fluid food composition" includes beverages provided that they have a viscosity as stated above.

Preferred examples of fluid food compositions are vegetable based compositions or, more preferably, fruit based compositions, such as jams, fruit based drinks, processed fruits, processed vegetables or fruit-and-vegetable preparations, such as smoothies or purees, like apple purees, fermented and non fermented dairy-products, such as milk drinks, flavored milk drinks, fruit milk drinks, yoghurt plain, with fruit or flavor, drinkable yoghurt, plain, with fruit or flavor, lactic acid drinks, concentrated or condensed milk products,

Preferred examples of solid food compositions are fermented and non fermented dairy-products, such as quark (white cheese) or "fromage frais"; baked goods, such as cake, biscuits, tarts, cookies, sweet bread, sweet rolls, muffins, doughnuts, including fruit, cream, chocolate or other fillings or toppings for bakery; confectionary, such as soft and hard candy, mints, chewable candy, chewing gum, chocolate, gum or gelatine based confectionary.

Typically the fluid or solid food composition comprises at least 0.1 percent, more typically at least 1 percent, most typically at least 5 percent of one or more mono- or disaccharides, based on the total weight of the fluid or solid food composition. Typically the fluid or solid food composition comprises up to 70 percent, more typically up to 50 percent, and most typically up to 25 percent of one or more mono- or disaccharides, based on the total weight of the fluid or solid food composition. The given typical amounts encompass the amount of added mono- or disaccharides as well as the amount of mono- or disaccharides that may be present in the food composition originating from natural sources, such as fructose from fruits in the food composition. Preferably the fluid or solid food composition does not comprise a high-intensity sweetener, such as stevia, aspartame, sucralose, neotame, acesulfame potassium, and saccharin.

Preferably the carboxymethyl cellulose is incorporated into the food composition in such an amount that the weight ratio between a) one or more mono- or disaccharides and b) the carboxymethyl cellulose is at least 0.5 : 1, preferably at least 1 : 1, more preferably at least 5 : 1, and particularly at least 10 : 1 and that the weight ratio between the components a) and b) is up to 200 : 1, preferably up to 100 : 1, more preferably up to 50 : 1, and most preferably up to 25 : 1. In the food composition the mono- or disaccharides encompass the amount of added mono- or disaccharides as well as the amount of mono- or disaccharides that may be present in the food composition originating from natural sources, such as fructose from fruits in the food composition. In one aspect of the invention, the carboxymethyl cellulose is used for enhancing the sweetness of mono- or disaccharides that are naturally occurring in food, such as fructose in fruit-based compositions or lactose in dairy-products.

Preferably the carboxymethyl cellulose is incorporated into the fluid food composition in such an amount that the viscosity of the fluid composition comprising the carboxymethyl cellulose is not more than 100 percent higher, more preferably not more than 50 percent higher, most preferably not more than 20 percent higher than the viscosity of the fluid composition without the carboxymethyl cellulose.

Some embodiments of the invention will now be described in detail in the following Examples.

### EXAMPLES

Unless otherwise mentioned, all parts and percentages are by weight. In the Examples the following test procedures were used.

### Sensory evaluation: triangular test according to ISO 4120:2001

The sensory evaluation was based on the requirements of the international standard ISO 4120:2004.

This method is effective for determining that a perceptible difference results (test for difference) or a perceptible difference does not result (test for similarity) between two samples A and B. Assessors receive a set of three samples (i.e. a triad) and are informed that two of the samples are alike and one is different (designated as odd sample). The assessors report which sample they believe to be different even if the selection is based only on a guess (forced-choice-test). That means the report "no difference" is not allowed in this test. A minimum of 6 assessors is required for a test for difference, at least 18 assessors are necessary for a test for similarity. Replicate evaluations may be used if needed to produce a sufficient number of total evaluations.

An equal number of six possible sequences of two samples A and B is used:
ABB AAB ABA BAA BBA BAB

The samples are coded with three-digit-random numbers and distributed at random in groups of six among the assessors. Each sequence is used once among the first group of six assessors, then the next group and so on.

The triads are presented simultaneously to the assessors. They are allowed to make repeated evaluations.

In this study a test for difference was conducted. At least 7 trained assessors participated in each session. The samples were presented to them in a random order, 30 g of the sample were served. Multiple tests were used to increase the number of assessments in some cases. Water and plain bread (consisting only of wheat starch and water) were served as palate neutralizer. The assessors were selected, trained, and monitored according to the respective German standard (DIN 10961:1996-08). The assessors were trained to differentiate changes in sucrose concentration levels of 0.2 %. Prior to conducting this study it was also confirmed by a test that 1, 2, 3 and 4 % sucrose in apple puree could be differentiated if no CMC was present. The test room was equipped according to the requirements of the German standard DIN 10962:1997.

### Sensory evaluation: Ranking Test according to DIN 10963:1997-11 and ISO 8587:2006

This ranking test is effective for determining a ranking within a given set of samples. The number of trained assessors, *n*, should be at least 5 for analytical tests, and replicate evaluations may be used if needed to produce a sufficient number of total evaluations. The samples are coded with three-digit-random numbers and distributed at random among the assessors. Assessors are asked to rank the samples with increasing intensity of the property that is tested (e.g. sweetness). If samples are perceived as equally intense, assessors remark this in their report sheet. Assessors are allowed to make repeated evaluations. The rank of the samples is evaluated as follows: samples perceived as least intense are given the rank 1, most intense samples rank *n* with *n* number of samples assessed, e.g. 4 when 4 samples were tested.

In the example below, 5 assessors tested 4 samples coded with letters A to D and identified the following orders in intensity:

| | **Rank** | | | |
|---|---|---|---|---|
| | 1 | 2 | 3 | 4 |

| **Assessor** | | | | |
|---|---|---|---|---|
| 1 | A | B | C | D |
| 2 | A | B = C = D | | |
| 3 | A | B | C = D | |
| 4 | A | D | C | B |
| 5 | A | B | C | D |

To determine the ranking sum, the samples are correlated with their rank, the average of the ranks is used for samples perceived as equal. For the example above, the sum of the ranks is evaluated as follows:

| | **Sample** | | | |
|---|---|---|---|---|
| | A | B | C | D |
| **Assessor** | | | | |
| 1 | 1 | 2 | 3 | 4 |
| 2 | 1 | 3 | 3 | 3 |
| 3 | 1 | 2 | 3.5 | 3.5 |
| 4 | 1 | 4 | 3 | 2 |
| 5 | 1 | 2 | 3 | 4 |
| Sum | 5 | 13 | 15.5 | 16.5 |

### Viscosity

The rheological method is applicable for solutions with viscosities between 1 and 40,000 mPa's (Rheometer: Haake RS1 with a cylinder system Z34 DIN, shear rate 10.0 s⁻¹). The Haake RS1 viscometer is commercially available as HAAKE RheoStress® 1 from Thermo Electron (Karlsruhe) GmbH, Germany. Viscosities above 40,000 mPa·s can be determined accordingly (Rheometer: Haake RS 1 with a cone and plate geometry, shear rate 10.0 s⁻¹).

The viscosity of the samples was measured at 20 °C±0.1 °C. The sample was put into the geometry and allowed to equilibrate to the temperature for 10 min at 20 °C ± 0.1 °C (without shear). Afterwards, a shear rate of 10.0 s⁻¹ was adjusted within 1 min and then the measurement started immediately. After 2 min the measurement was stopped.

### Example 1 and Comparative Example A

The CMC (the sodium salt of carboxymethyl cellulose) has a degree of carboxymethyl substitution per anhydroglucose unit (DS) of 0.9, measured according to ASTM D 1439-03 "Standard Test Methods for Sodium Carboxymethylcellulose; Degree of Etherification, Test Method B: Nonaqueous Titration" and a viscosity of 41 mPa·s, measured as a 2 weight percent aqueous solution using the Haake RS1 viscometer as described above.

### Aqueous CMC solutions (Comparative)

Solutions were prepared at room temperature. CMC was added while stirring at 1500 rpm within 1 min and stirred for an additional 90 min at 1000 rpm. Afterwards, the solutions were stored until all air bubbles had disappeared (Stirrer: IKA Eurostar control-visc 6000). The composition of the aqueous solutions is listed in Table 1 below.

**Table 1**

| | Control (wt. %) | Sample 3 (wt. %) | Sample 4 (wt. %) | Sample 5 (wt. %) |
|---|---|---|---|---|
| 0.4 % aq. CMC solution | -- | 97 | 96.5 | 96 |
| Sucrose | 4 | 3 | 3.5 | 4 |
| Water | 96 | -- | -- | -- |
| Viscosity of solution (mPa•s) | 2 | 5 | 5 | 5 |

### Apple puree samples with CMC (Example)

Sucrose-free apple puree was used as reference food. The sucrose-free apple puree had a viscosity of about 2300 mPa·s, measured at 20 °C using the Haake RS1 viscometer as described above.

Sucrose was added to sucrose-free apple puree in amounts listed in Table 2 below. 10 g of a separately produced 4 % aqueous CMC solution were added to the apple puree giving 0.4 % CMC in the final puree. The addition of CMC did not have a significant impact on the viscosity of the apple puree; the total viscosity was increased only about 10 %. In the control, 10 g tap water was added to mimic this solution. The apple puree samples including the control samples were stirred gently with an egg whisker for 1 min to avoid destruction of the puree structure (assessors should not be able to distinguish the samples with or without CMC and/or sucrose from observation of the texture). Directly before the sensory test, samples were stirred with the egg whisker again. The composition of the apple puree samples is listed in Table 2 below.

**Table 2**

| | Control (wt. %) | Sample 1 (wt. %) | Sample 2 (wt. %) | Sample 3 (wt. %) | Sample 4 (wt. %) | Sample 5 (wt. %) |
|---|---|---|---|---|---|---|
| 4 % aq. CMC solution | -- | 10 | 10 | 10 | 10 | 10 |
| Sucrose | 4 | 2.5 | 2.8 | 3 | 3.5 | 4 |
| Water | 10 | -- | -- | -- | -- | -- |
| Sucrose-free Apple puree | 86 | 87.5 | 87.2 | 87 | 86.5 | 86 |
| Viscosity of sample (mPa·s) | 2280 | Not measured | Not measured | Not measured | Not measured | 2419 |

A triangular test according to ISO 4120:2001 was done as described above to do a sensory evaluation of the aqueous solutions of Comparative Example A listed in Table 1 above and of the apple puree samples of Example 1 listed in Table 2 above. The assessors were selected, trained, and monitored according to the respective German standard (DIN 10961:1996-08). The assessors were trained to differentiate changes in sucrose concentration levels of 0.2 %. Prior to conducting this study it was also confirmed by a test that 1, 2, 3 and 4 % sucrose in apple puree could be differentiated if no CMC was present.

### Aqueous solutions (Comparative):

In aqueous solutions, assessors could not clearly differentiate the control (4% sucrose, no CMC) from the sample with 4% sucrose and 0.4 % CMC but from the sample with 3.5 % sucrose and 0.4 % CMC. Thus, a sucrose reduction of 12.5 % was already significantly perceptible. For the sample with CMC with lower sucrose concentrations all assessors identified the odd sample in the triangle. Accordingly, when CMC was incorporated into the aqueous sucrose solution, the sucrose content could not be significantly reduced without a perceived reduction in sweetness.

**Table 3**

| Sample A | Sample B | Number of assessors who identified the odd Sample | Number of assessors who did not identify the odd Sample |
|---|---|---|---|
| Control in Table 1 (water + 4% sucrose) | Sample 5 in Table 1 (0.4% CMC + 4% sucrose) | 4 | 3 |
| Control in Table 1 (water + 4% sucrose) | Sample 4 in Table 1 (0.4% CMC + 3.5% sucrose) | 5 | 2 |
| Control in Table 1 (water + 4% sucrose) | Sample 3 in Table 1 (0.4% CMC + 3% sucrose) | 7 | 0 |

### Apple puree (AP) (Example):

In contrast to the aqueous solutions, assessors could not differentiate between the control and the samples with CMC even for 3 % sucrose (25 % sucrose reduction).

**Table 4**

| Sample A | Sample B | Number of assessors who identified the odd Sample | Number of assessors who did not identify the odd Sample |
|---|---|---|---|
| Control in Table 2 (AP + water + 4% sucrose) | Sample 5 in Table 2 (0.4% CMC in AP + 4% sucrose) | 1 | 6 |
| Control in Table 2 (AP + water + 4% sucrose) | Sample 4 in Table 2 (0.4% CMC in AP + 3.5% sucrose) | 2 | 5 |
| Control in Table 2 (AP + water + 4% sucrose) | Sample 3 in Table 2 (0.4% CMC in AP + 3% sucrose) | 2 | 5 |

With a further reduction of the sucrose content in the CMC samples to 2.8 and 2.5 %, (30 and 37.5 % reduction) the differences to the control became significant.

**Table 5**

| Sample A | Sample B | Number of assessors who identified the odd Sample | Number of assessors who did not identify the odd Sample |
|---|---|---|---|
| Control (AP + water + 4% sucrose) | Sample 2 of Table 2 (0.4% CMC in AP + 2.8% sucrose) | 10 | 7 |
| Control (AP + water + 4% sucrose) | Sample 1 of Table 2 (0.4% CMC in AP + 2.5% sucrose) | 11 | 6 |

### Example 2 and Comparative Example B

The same CMC was used as in Example 1 and Comparative Example A. The same apple puree was used as in Example 1. Aqueous CMC solutions and apple puree samples with CMC were prepared as in Comparative Example A and in Example 1, except that different concentrations of sucrose were added. The compositions of the aqueous solutions are listed in Table 6 below. The compositions of the apple puree samples are listed in Table 7 below.

**Table 6**

| | **Water** | **0.4 % aq. CMC solution** | **Sucrose** |
|---|---|---|---|
| Control 1 (wt. %) | 100 | -- | -- |
| Sample 1 (wt. %) | -- | 100 | -- |
| Sample 2 (wt. %) | -- | 99 | 1 |
| Sample 3 (wt. %) | -- | 98 | 2 |
| Sample 4 (wt. %) | -- | 97 | 3 |
| Control 2 (wt. %) | 96 | -- | 4 |
| Sample 5 (wt. %) | -- | 96 | 4 |

**Table 7**

| | **Water** | **4 % aq. CMC solution** | **Sucrose** | **Sucrose-free Apple puree** |
|---|---|---|---|---|
| Control 1 (wt. %) | 10 | -- | -- | 90 |
| Sample 1 (wt. %) | -- | 10 | -- | 90 |
| Sample 2 (wt. %) | -- | 10 | 1 | 89 |
| Sample 3 (wt. %) | -- | 10 | 2 | 88 |
| Sample 4 (wt. %) | -- | 10 | 3 | 87 |
| Control 2 (wt. %) | 10 | -- | 4 | 86 |
| Sample 5 (wt. %) | -- | 10 | 4 | 86 |

A ranking test according to DIN 10963:1997-11 and ISO 8587:2006 was done as described above to do a sensory evaluation of the aqueous solutions of Comparative Example B listed in Table 6 above and of the apple puree samples of Example 2 listed in Table 7 above. The assessors had to rank the perceived sweetness of the samples. In one test series the different aqueous solutions in Comparative Example B were compared with each other. In another test series the different apple puree samples of Example 2 were compared with each other and with control samples. The results are listed in Table 8 below. The higher rank sums indicate higher sweetness. It should be noted that only the rank sums within the same test series can be compared, but not the rank sums of two different test series.

**Table 8**

| **Comparative Example B** | | **Example 2** | |
|---|---|---|---|
| **Sample** | **Rank sum** | **Sample** | **Rank sum** |
| Control 1 in Table 6 (water) | 7.0 | Control 1 in Table 7 (AP + water) | 5.5 |
| Sample 1 in Table 6 (0.4% CMC) | 8.0 | Sample 1 in Table 7 (AP + 0.4% CMC) | 9.5 |
| Sample 2 in Table 6 (0.4% CMC + 1% sucrose) | 15.0 | Sample 2 in Table 7 (AP + 0.4% CMC + 1% sucrose) | 15.0 |

| **Comparative Example B** | | **Example 2** | |
|---|---|---|---|
| **Sample** | **Rank sum** | **Sample** | **Rank sum** |
| Sample 3 in Table 6 (0.4% CMC + 2% sucrose) | 20.0 | Sample 3 in Table 7 (AP + 0.4% CMC + 2% sucrose) | 20.5 |
| Sample 4 in Table 6 (0.4% CMC + 3% sucrose) | 25.0 | Sample 4 in Table 7 (AP + 0.4% CMC + 3% sucrose) | 26.5 |
| Control 2 in Table 6 (water + 4% sucrose) | 31.0 | Control 2 in Table 7 (AP + water + 4% sucrose) | 28.0 |
| Sample 5 in Table 6 (0.4% CMC + 4% sucrose) | 34.0 | Sample 5 in Table 7 (AP + 0.4% CMC + 4% sucrose) | 35.0 |

The results in Table 8 illustrate that the assessors perceived the sweetness of water with and without CMC substantially the same. There was some, but not a big difference between the sweetness of a solution of 4% sucrose in plain water with and without CMC (see Control 1 vs. Sample 1 and Control 2 vs. Sample 5 in Table 6). This is consistent with the teaching in the prior art.

In contrast thereto, the assessors perceived the apple puree with CMC as sweeter than the apple puree without CMC. When the apple puree contained added sucrose, the difference in sweetness was even more significant (see Control 1 vs. Sample 1 and Control 2 vs. Sample 5 in Table 7).

## Claims

1. A sweetener composition consisting of
a) one or more mono- or disaccharides and b) a carboxymethyl cellulose having a viscosity of up to 200 mPa·s, measured as a 2 weight percent aqueous solution at 20 °C using a Haake RS1 viscometer with a cylinder system Z34 DIN at 10.0 s⁻¹ such that the weight ratio of a) : b) is from 0.5 : 1 to 25 : 1, and
c) 0 to 40 weight percent, based on the total weight of the sweetener composition, of one or more additional ingredients.

2. The sweetener composition of claim 1 consisting of
a) one or more mono- or disaccharides and b) the carboxymethyl cellulose in a weight ratio of a) : b) of from 1 : 1 to 25 : 1, and
c) 0 to 20 weight percent, based on the total weight of the sweetener composition, of one or more additional ingredients.

3. The sweetener composition of claim 2 consisting of
a) one or more mono- or disaccharides and b) the carboxymethyl cellulose in a weight ratio of a) : b) of from 2 : 1 to 5 : 1, and
c) 0 to 5 weight percent, based on the total weight of the sweetener composition, of one or more additional ingredients.

4. The sweetener composition of any one of claims 1 to 3 wherein component a) is a mono- or disaccharide selected from the group consisting of fructose, glucose, lactose, maltose and sucrose.

5. A method of increasing the sweetening effect of mono- or disaccharides in a fluid or solid food composition comprising the step of incorporating a carboxymethyl cellulose having a viscosity of up to 200 mPa·s, measured as a 2 weight percent aqueous solution at 20 °C using a Haake RS1 viscometer with a cylinder system Z34 DIN at 10.0 s⁻¹, in combination with at least one mono- or disaccharide in the fluid or solid food composition, with the proviso that the fluid food composition has a viscosity of at least 10 mPa·s, when measured in the absence of the carboxymethyl cellulose at 20 °C using a Haake RS1 viscometer at 10.0 s⁻¹.

6. The method of claim 5, wherein the amount of mono- or disaccharide incorporated in the fluid or solid food composition is a fraction of an amount of mono- or disaccharide that is recommended in a given recipe for the food composition resulting in a loss of sweetness, and the carboxymethyl cellulose is incorporated in the fluid or solid food composition as the only ingredient to compensate for the lost sweetness.

7. The method of claim 5 or 6 wherein the carboxymethyl cellulose is incorporated in a fluid food composition which has a viscosity of at least 10 mPa·s, when measured in the absence of the carboxymethyl cellulose at 20 °C, and the carboxymethyl cellulose is incorporated into the fluid food composition in such an amount that the viscosity of the fluid composition comprising the carboxymethyl cellulose is not more than 100 percent higher than the viscosity of the fluid composition without the carboxymethyl cellulose.

8. The method of any one of claims 5 to 7 wherein the fluid or solid food composition does not comprise a high-intensity sweetener.

9. The method of any one of claims 5 to 8 wherein the carboxymethyl cellulose is incorporated into the food composition in such an amount that the weight ratio between a) one or more mono- or disaccharides and b) the carboxymethyl cellulose is from 0.5 : 1 to 200 : 1.

10. The method of any one of claims 5 to 9 wherein the fluid food composition is a fruit-based composition.

11. The method of any one of claims 5 to 10 wherein the carboxymethyl cellulose is incorporated in a fluid food composition which has a viscosity of at least 100 mPa·s, when measured in the absence of the carboxymethyl cellulose at 20 °C.

12. Use of a carboxymethyl cellulose having a viscosity of up to 200 mPa·s, measured as a 2 weight percent aqueous solution at 20 °C using a Haake RS1 viscometer with a cylinder system Z34 DIN at 10.0 s⁻¹ for increasing the sweetening effect of mono- or disaccharides in i) a fluid food composition having a viscosity of at least 10 mPa·s when measured in the absence of the carboxymethyl cellulose at 20 °C using a Haake RS1 viscometer at 10.0 s⁻¹, or ii) in a solid food composition.

13. The use of claim 12 wherein the fluid food composition has a viscosity of at least 100 mPa·s when measured in the absence of the carboxymethyl cellulose at 20 °C.

14. The use of claim 12 or 13 wherein the carboxymethyl cellulose is used in such amount that the viscosity of the fluid composition comprising the carboxymethyl cellulose is not more than 100 percent higher than the viscosity of the fluid composition without the carboxymethyl cellulose.

15. The use of any one of claims 12 to 14 wherein the carboxymethyl cellulose is used in such an amount that the weight ratio between a) one or more mono- or disaccharides and b) the carboxymethyl cellulose is from 0.5 : 1 to 200 : 1.

## Patentansprüche

1. Eine Süßstoffzusammensetzung bestehend aus
a) einem oder mehreren Mono- oder Disaccharid(en) und b) einer Carboxymethylcellulose, die eine Viskosität von bis zu 200 mPa·s, gemessen als eine 2-Gew.-%ige wässrige Lösung bei 20°C unter Verwendung eines Haake RS1 Viskosimeters mit einem Zylindersystem Z34 DIN bei 10,0 s⁻¹, aufweist, derart, dass das Gewichtsverhältnis von a):b) von 0,5:1 bis 25:1 ist, und
c) 0 bis 40 Gew.-%, basierend auf dem Gesamtgewicht der Süßstoffzusammensetzung, an einem oder mehreren zusätzlichen Inhaltsstoff(en).

2. Die Süßstoffzusammensetzung des Anspruchs 1 bestehend aus
a) einem oder mehreren Mono- oder Disaccharid(en) und b) der Carboxymethylcellulose in einem Gewichtsverhältnis von a):b) von 1:1 bis 25:1, und
c) 0 bis 20 Gew.-%, basierend auf dem Gesamtgewicht der Süßstoffzusammensetzung, an einem oder mehreren zusätzlichen Inhaltsstoff(en).

3. Die Süßstoffzusammensetzung des Anspruchs 2 bestehend aus
a) einem oder mehreren Mono- oder Disaccharid(en) und b) der Carboxymethylcellulose in einem Gewichtsverhältnis von a):b) von 2:1 bis 5:1, und
c) 0 bis 5 Gew.-%, basierend auf dem Gesamtgewicht der Süßstoffzusammensetzung, an einem oder mehreren zusätzlichen Inhaltsstoff(en).

4. Die Süßstoffzusammensetzung gemäß einem der Ansprüche 1 bis 3, wobei die Komponente a) ein Mono- oder Disaccharid ausgewählt aus der Gruppe bestehend aus Fruktose, Glukose, Laktose, Maltose und Sucrose ist.

5. Ein Verfahren zum Erhöhen der Süßkraft von Mono- oder Disacchariden in einer fließfähigen oder festen Lebensmittelzusammensetzung umfassend den Schritt des Einbringens einer Carboxymethylcellulose aufweisend eine Viskosität von bis zu 200 mPa·s, gemessen als eine 2-Gew.-%ige wässrige Lösung bei 20°C unter Verwendung eines Haake RS1 Viskosimeters mit einem Zylindersystem Z34 DIN bei 10,0 s⁻¹, in Kombination mit wenigstens einem Mono- oder Disaccharid in die fließfähige oder feste Lebensmittelzusammensetzung, mit der Maßgabe, dass die fließfähige Lebensmittelzusammensetzung eine Viskosität von wenigstens 10 mPa·s, wenn in der Abwesenheit von der Carboxymethylcellulose bei 20°C unter Verwendung eines Haake RS1 Viskosimeters bei 10,0 s⁻¹ gemessen, aufweist.

6. Das Verfahren des Anspruchs 5, wobei die in die fließfähige oder feste Lebensmittelzusammensetzung eingebrachte Menge an Mono- oder Disaccharid ein Bruchteil von einer Menge an Mono- oder Disaccharid, die in einer gegebenen Rezeptur für die Lebensmittelzusammensetzung empfohlen wird, ist, resultierend in einem Verlust an Süße, und die Carboxymethylcellulose als der einzige Inhaltsstoff zum Kompensieren der eingebüßten Süße in die fließfähige oder feste Lebensmittelzusammensetzung eingebracht wird.

7. Das Verfahren des Anspruchs 5 oder 6, wobei die Carboxymethylcellulose in eine fließfähige Lebensmittelzusammensetzung, welche eine Viskosität von wenigstens 10 mPa·s, wenn in der Abwesenheit der Carboxymethylcellulose bei 20°C gemessen, aufweist, eingebracht wird, und die Carboxymethylcellulose in die fließfähige Lebensmittelzusammensetzung in solch einer Menge eingebracht wird, dass die Viskosität der fließfähigen Zusammensetzung umfassend die Carboxymethylcellulose nicht mehr als 100 % höher als die Viskosität der fließfähigen Zusammensetzung ohne die Carboxymethylcellulose ist.

8. Das Verfahren gemäß einem der Ansprüche 5 bis 7, wobei die fließfähige oder feste Lebensmittelzusammensetzung einen Süßstoff hoher Intensität nicht umfasst.

9. Das Verfahren gemäß einem der Ansprüche 5 bis 8, wobei die Carboxymethylcellulose in die Lebensmittelzusammensetzung in solch einer Menge eingebracht wird, dass das Gewichtsverhältnis zwischen a) einem oder mehreren Mono- oder Disaccharid(en) und b) der Carboxymethylcellulose von 0,5:1 bis 200:1 beträgt.

10. Das Verfahren gemäß einem der Ansprüche 5 bis 9, wobei die Lebensmittelzusammensetzung eine fruchtbasierte Zusammensetzung ist.

11. Das Verfahren gemäß einem der Ansprüche 5 bis 10, wobei die Carboxymethylcellulose in eine fließfähige Lebensmittelzusammensetzung, welche eine Viskosität von wenigstens 100 mPa·s, wenn in der Abwesenheit der Carboxymethylcellulosse bei 20°C gemessen, aufweist, eingebracht wird.

12. Verwendung einer Carboxymethylcellulose aufweisend eine Viskosität von bis zu 200 mPa·s, gemessen als eine 2-Gew.-%ige wässrige Lösung bei 20°C unter Verwendung eines Haake RS1 Viskosimeters mit einem Zylindersystem Z34 DIN bei 10,0 s⁻¹, zum Erhöhen der Süßkraft von Mono- oder Disacchariden in i) einer fließfähigen Lebensmittelzusammensetzung aufweisend eine Viskosität von wenigstens 10 mPa·s, wenn in der Abwesenheit der Carboxymethylcellulose bei 20°C unter Verwendung eines Haake RS1 Viskosimeters bei 10.0 s⁻¹ gemessen, oder ii) in einer festen Lebensmittelzusammensetzung.

13. Die Verwendung nach Anspruch 12, wobei die fließfähige Lebensmittelzusammensetzung eine Viskosität von wenigstens 100 mPa·s, wenn in der Abwesenheit der Carboxymethylcellulose bei 20°C gemessen, aufweist.

14. Die Verwendung nach Anspruch 12 oder 13, wobei die Carboxymethylcellulose in solch einer Menge verwendet wird, dass die Viskosität der fließfähigen Zusammensetzung umfassend die Carboxymethylcellulose nicht mehr als 100 % höher als die Viskosität der fließfähigen Zusammensetzung ohne die Carboxymethylcellulose ist.

15. Die Verwendung nach irgendeinem der Ansprüche 12 bis 14, wobei die Carboxymethylcellulose in solch einer Menge verwendet wird, dass das Gewichtsverhältnis zwischen a) einem oder mehreren Mono- oder Disaccharid(en) und b) der Carboxymethylcellulose von 0,5:1 bis 200:1 beträgt.

## Revendications

1. Une composition d'édulcorant constituée
a) d'un ou de plusieurs mono- ou disaccharides et b) d'une carboxyméthylcellulose ayant une viscosité allant jusqu'à 200 mPa·s, mesurée en tant que solution aqueuse à 2 pour cent en poids à 20 °C en utilisant un viscosimètre Haake RS1 avec un système de cylindres Z34 DIN à 10,0 s⁻¹ de telle sorte que le rapport en poids de a)/b) aille de 0,5/1 à 25/1, et
c) de 0 à 40 pour cent en poids, rapporté au poids total de la composition d'édulcorant, d'un ou de plusieurs ingrédients supplémentaires.

2. La composition d'édulcorant de la revendication 1 constituée
a) d'un ou de plusieurs mono- ou disaccharides et b) de la carboxyméthylcellulose dans un rapport en poids de a)/b) allant de 1/1 à 25/1, et
c) de 0 à 20 pour cent en poids, rapporté au poids total de la composition d'édulcorant, d'un ou de plusieurs ingrédients supplémentaires.

3. La composition d'édulcorant de la revendication 2 constituée
a) d'un ou de plusieurs mono- ou disaccharides et b) de la carboxyméthylcellulose dans un rapport en poids de a)/b) allant de 2/1 à 5/1, et
c) de 0 à 5 pour cent en poids, rapporté au poids total de la composition d'édulcorant, d'un ou de plusieurs ingrédients supplémentaires.

4. La composition d'édulcorant de n'importe laquelle des revendications 1 à 3 dans laquelle le constituant a) est un mono- ou disaccharide sélectionné dans le groupe constitué de fructose, glucose, lactose, maltose et saccharose.

5. Une méthode d'augmentation de l'effet édulcorant de mono- ou disaccharides dans une composition alimentaire liquide ou solide comprenant l'étape consistant à incorporer une carboxyméthylcellulose ayant une viscosité allant jusqu'à 200 mPa·s, mesurée en tant que solution aqueuse à 2 pour cent en poids à 20 °C en utilisant un viscosimètre Haake RS1 avec un système de cylindres Z34 DIN à 10,0 s⁻¹, en combinaison avec au moins un mono- ou disaccharide dans la composition alimentaire liquide ou solide, à la condition que la composition alimentaire liquide ait une viscosité d'au moins 10 mPa·s, lorsque mesurée en l'absence de la carboxyméthylcellulose à 20 °C en utilisant un viscosimètre Haake RS1 à 10,0 s⁻¹.

6. La méthode de la revendication 5, dans laquelle la quantité de mono- ou disaccharide incorporée dans la composition alimentaire liquide ou solide est une fraction d'une quantité de mono- ou disaccharide qui est recommandée dans une recette donnée pour la composition alimentaire résultant en une perte de caractère sucré, et la carboxyméthylcellulose est incorporée dans la composition alimentaire liquide ou solide en tant qu'ingrédient unique afin de compenser le caractère sucré perdu.

7. La méthode de la revendication 5 ou de la revendication 6 dans laquelle la carboxyméthylcellulose est incorporée dans une composition alimentaire liquide qui a une viscosité d'au moins 10 mPa·s, lorsque mesurée en l'absence de la carboxyméthylcellulose à 20 °C, et la carboxyméthylcellulose est incorporée dans la composition alimentaire liquide dans une quantité telle que la viscosité de la composition liquide comprenant la carboxyméthylcellulose n'aille pas au-delà de 100 pour cent de plus que la viscosité de la composition liquide sans la carboxyméthylcellulose.

8. La méthode de n'importe laquelle des revendications 5 à 7 dans laquelle la composition alimentaire liquide ou solide ne comprend pas d'édulcorant de haute intensité.

9. La méthode de n'importe laquelle des revendications 5 à 8 dans laquelle la carboxyméthylcellulose est incorporée dans la composition alimentaire dans une quantité telle que le rapport en poids entre a) un ou plusieurs mono- ou disaccharides et b) la carboxyméthylcellulose aille de 0,5/1 à 200/1.

10. La méthode de n'importe laquelle des revendications 5 à 9 dans laquelle la composition alimentaire liquide est une composition à base de fruit.

11. La méthode de n'importe laquelle des revendications 5 à 10 dans laquelle la carboxyméthylcellulose est incorporée dans une composition alimentaire liquide qui a une viscosité d'au moins 100 mPa·s, lorsque mesurée en l'absence de la carboxyméthylcellulose à 20 °C.

12. Utilisation d'une carboxyméthylcellulose ayant une viscosité allant jusqu'à 200 mPa·s, mesurée en tant que solution aqueuse à 2 pour cent en poids à 20 °C en utilisant un viscosimètre Haake RS1 avec un système de cylindres Z34 DIN à 10,0 s⁻¹ pour augmenter l'effet édulcorant de mono- ou disaccharides dans i) une composition alimentaire liquide ayant une viscosité d'au moins 10 mPa·s lorsque mesurée en l'absence de la carboxyméthylcellulose à 20 °C en utilisant un viscosimètre Haake RS1 à 10,0 s⁻¹, ou ii) dans une composition alimentaire solide.

13. L'utilisation de la revendication 12 dans laquelle la composition alimentaire liquide a une viscosité d'au moins 100 mPa·s lorsque mesurée en l'absence de la carboxyméthylcellulose à 20 °C.

14. L'utilisation de la revendication 12 ou de la revendication 13 dans laquelle la carboxyméthylcellulose est utilisée dans une quantité telle que la viscosité de la composition liquide comprenant la carboxyméthylcellulose n'aille pas au-delà de 100 pour cent de plus que la viscosité de la composition liquide sans la carboxyméthylcellulose.

15. L'utilisation de n'importe laquelle des revendications 12 à 14 dans laquelle la carboxyméthylcellulose est utilisée dans une quantité telle que le rapport en poids entre a) un ou plusieurs mono- ou disaccharides et b) la carboxyméthylcellulose aille de 0,5/1 à 200/1.
